# EUROPEAN PATENT SPECIFICATION

(11) **EP 3 789 156 B1**
(45) Date of publication and mention of the grant of the patent: **07.09.2022**
(21) Application number: 20182083.4
(22) Date of filing: 24.06.2020
(51) Int. Cl.: B23K 26/00, B22F 3/105, B23K 26/342

(54) **MACHINING APPARATUS AND MACHINING METHOD**
BEARBEITUNGSVORRICHTUNG UND BEARBEITUNGSMETHODE
APPAREIL D'USINAGE ET PROCÉDÉ D'USINAGE

(30) Priority: 09.09.2019 JP 2019163873
(43) Date of publication of application: 10.03.2021
(73) Proprietor: Sugino Machine Limited, Uozu city Toyama 937-8511 (JP)
(72) Inventor: USHIJIMA, Katsumi, Uozu City, Toyama 9378511 (JP); KIMURA, Kazuo, Uozu City, Toyama 9378511 (JP)
(74) Representative: Global IP Europe Patentanwaltskanzlei

(56) References cited:
- WO-A1-97/10067
- GB-A- 2 562 596

## Description

### BACKGROUND

### 1. Technical Field

The present invention relates to a machining apparatus and a machining method. 2. Description of the Background

A machining apparatus including a clamping mechanism for receiving an additive manufacturing head, a machining head docking manifold and a supply docking manifold has been proposed (Japanese Patent Application Publication No. 2015-527939). The supply docking manifold is connected to or separated from the machining head docking manifold to provide one or more medium when the additive manufacturing head is connected to the clamping mechanism. Document WO 9710067, on which the preamble of claim 1 is based, discloses a device for producing metal workpieces, in particular form tools, with a coating device, which has a laser unit with a laser beam focusing head and a powder feed device for feeding metalliferous powder to a melting zone of the laser beam, and a cutting device.

### BRIEF SUMMARY

The conventional machining apparatus has a complicated structure.

An object of the present invention is to provide a compact machining apparatus according to claim 1.

A second aspect of the present invention provides a machining method of a workpiece, the machining method according to claim 8.

The machining apparatus of the present invention is a combined machining apparatus for additive manufacturing and cutting. The additive manufacturing is performed by the additive manufacturing head. The cutting is performed by a cutting tool mounted on the spindle head.

The additive material is a wire or powder. The additive material is, for example, metal, ceramic, plastic, or composite or mixture thereof. When the additive material is powder, the spindle extends in a vertical direction. When the additive material is a wire, the spindle may extend horizontally or may be tilted.

The energy may be, for example, laser, electron beam, arc, plasma, converging electromagnetic radiation, diverging electromagnetic radiation, or combination thereof.

The machining apparatus may include a shield gas supply device. The shield gas supply is connected to the additive manufacturing head. The additive manufacturing head may emit the shielding gas.

The additive manufacturing head emits additive material and energy toward the workpiece. The additive manufacturing head supplies additive material to the surface of the workpiece. The surface of the workpiece and the surface of the additive material are melted with the energy, and the additive material is adhered to the surface of the workpiece.

A driving device is, for example, a fluid cylinder, an electric cylinder, a servo motor and ball screw mechanism, and a rack and pinion mechanism.

The driving device may move a distal end of the additive manufacturing head away from the workpiece than a distal end of the spindle.

The guide is, for example, a linear guide or a ball spline. If the vertical moving guide is a linear guide, either one of the guide rail and the guide block of the linear guide is disposed on the spindle head and the other is disposed on the additive manufacturing head. One or more (for example two) of the vertical moving guide may be provided.

The supply device may be connected to the additive manufacturing head by a shield gas supply tube. If the additive material is a powder, the additive material may be conveyed by a feeder gas. If the additive material is wire, the additive material supply tube may be omitted.

The shield gas supply tube, the additive material supply tube, and the optical fiber may be disposed in the cable protection tube.

The dummy plug may include a taper shank that fits the spindle hole, and a pull stud that fits the tool clamping device. The dummy plug may be stored in the tool magazine of the automatic tool changer. The dummy plug may be attached to the spindle hole by the automatic tool changer.

The machining apparatus may include a spindle cover. The spindle cover is, for example, a shutter. When performing additive manufacturing, the spindle cover closes the spindle hole. Thus, the spindle cover prevents foreign matter from entering the spindle hole. When performing cutting, the spindle cover is opened to expose the spindle hole, and the cutting tool is attached to the spindle.

Preferably, the machining apparatus includes a numerical control device. The moving device is numerically controlled. The moving device is a three to five-axes moving device. The moving device has a translation axis of, for example when viewed from the front, the lateral direction (X-axis), the front-rear direction (Y-axis), the vertical direction (Z-axis). The moving device may have a rotation axis about the lateral direction (A-axis), a rotation axis about the vertical direction (C-axis), and a rotation axis about the front-rear direction (B-axis). The above-described translation axes and rotation axes may be disposed on either the spindle head or the table.

Preferably, the machining apparatus includes an automatic tool changer. Preferably, the spindle includes a spindle hole and a tool clamping device.

Preferably, the machining apparatus includes a spindle head, an additive manufacturing head, and a splash cover covering the table or the automatic tool changer. The splash cover prevents the scattering of chips generated during cutting, coolant for cutting, and foreign matter and gas generated during additive manufacturing. Preferably, the splash cover shields the energy emitted by the additive manufacturing head.

The machining apparatus may include a second spindle for rotating the table. The second spindle may extends in the same direction as the table rotation axis (C-axis). In this case, the spindle of the spindle head (first spindle) can be fixed, and a non-rotating tool (e.g., a bite) is mounted.

The workpiece may be rotated and cut with the non-rotating tool mounted on the first spindle.

Removing the cutting tool from the spindle and mounting the dummy plug to the spindle hole may be performed simultaneously. For example, the tool changer replaces the cutting tool mounted on the spindle with the dummy plug.

At the same time as removing the cutting tool from the spindle, the spindle cover may close the spindle hole.

Removing the dummy plug from the spindle and mounting the cutting tool to the spindle hole may be performed simultaneously. For example, the tool changer replaces the dummy plug mounted on the spindle with the cutting tool.

At the same time as opening the spindle cover to expose the spindle hole, the cutting tool may be mounted to the spindle.

According to the present invention, a compact machining apparatus is provided.

### BRIEF DESCRIPTION OF DRAWINGS

FIG. 1 shows a machining apparatus according to an embodiment.
FIG. 2 shows a flowchart showing a machining method according to the embodiment.

### DETAILED DESCRIPTION

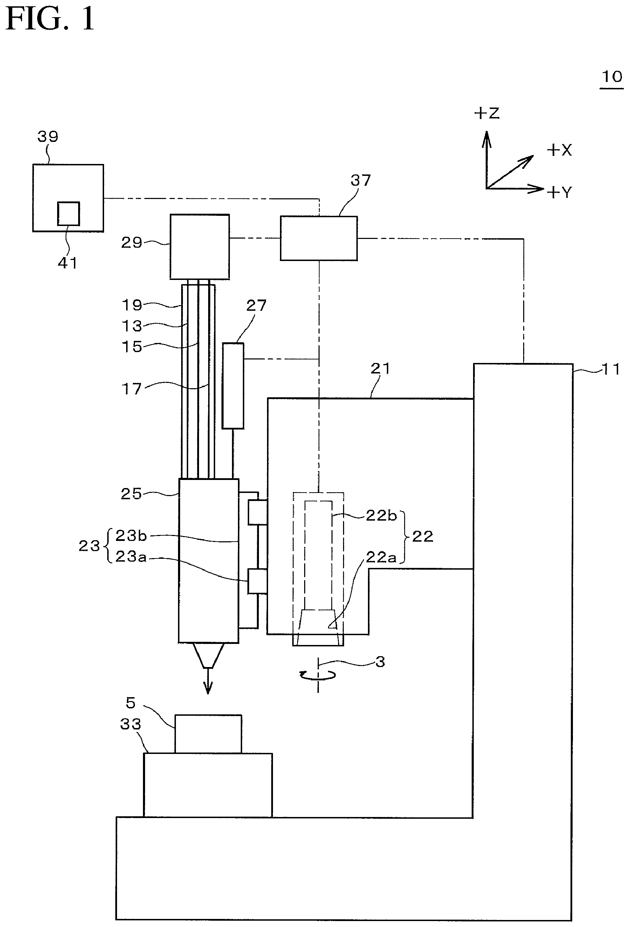

A machining apparatus 10 of the present embodiment is a combined machining apparatus of additive manufacturing and cutting. As shown in FIG. 1, the machining apparatus 10 includes a spindle head 21, a table 33, a moving device 11, an additive manufacturing head 25, a linear guide (guide) 23, a cylinder (driving device) 27, a supply device 29, an automatic tool changer (ATC) 39, a dummy plug 41 and a numerical control device 37.

The moving device 11, for example, includes a frame, a spindle head moving device (X-axis, Z-axis), and a table moving device (Y-axis, A-axis, C-axis).

The table 33 fixes the workpiece 5. The table 33 is installed in, for example, a trunnion type jig.

The spindle head 21 includes a spindle 22. The spindle 22, for example, includes a spindle tapered hole (spindle hole) 22a and the tool clamping device 22b. The spindle 22 extends in a vertical direction. For example, a cutting tool (not shown) is mounted to the spindle tapered hole 22a. The tool clamping device 22b clamps the cutting tool. The cutting tool clamped to the tool clamping device 22b cuts the workpiece 5.

The linear guide 23 includes a guide block 23a and a guide rail 23b. For example, two guide blocks 23a are arranged in a vertical direction on a front surface of the spindle head 21. The guide rail 23b is arranged on the guide blocks 23a, and moves in the vertical direction along the guide block 23a.

The cylinder 27 is installed to the spindle head 21. The cylinder 27 drives the additive manufacturing head 25 in the vertical direction. When the additive manufacturing head 25 approaches toward the workpiece 5 by the cylinder 27, a distal end of the additive manufacturing head 25 is located below a distal end of the spindle 22. When the additive manufacturing head 25 is away from the workpiece 5 by the cylinder 27, the distal end of the additive manufacturing head 25 is positioned above the distal end of the spindle 22.

The additive manufacturing head 25 is installed on the guide rail 23b. The additive manufacturing head 25 releases additive material, shield gas and energy in parallel with an axis 3 of the spindle 22. The energy of the present embodiment is, for example, a laser. The additive manufacturing head 25 performs additive manufacturing on the workpiece 5.

The supply device 29 supplies additive material, shield gas and energy to the additive manufacturing head 25. The supply device 29 is connected to the additive manufacturing head 25 by an additive material supply tube 13, a shield gas supply tube 15, and an optical fiber 17. The tube 13, the tube 15, and the optical fiber 17 are inserted in, for example, a cable protective tube 19. The additive material is a powder. The additive material is conveyed into the tube 13 by the feeder gas.

The ATC 39 is installed in the spindle head 21 or the moving device 11. The ATC 39 is, for example, a double-arm type ATC or an armless type ATC. The double-arm ATC 39 is adaptable to the dummy plug 41. If the ATC 39 is the armless type ATC, the spindle cover (shutter) closing the spindle tapered hole 22a when performing additive manufacturing reduces the time of replacing the cutting tool.

The dummy plug 41 is stored in the ATC 39. The dummy plug 41 is detachably attached to the spindle tapered hole 22a by the ATC 39, and is clamped or unclamped to the spindle 22 by the tool clamping device 22b.

The numerical control device 37 controls the moving device 11, the spindle 22, the cylinder 27, the device 29, the ATC 39 and the additive manufacturing head 25.

According to the present embodiment, the moving device 11 relatively moves the spindle head 21 together with the additive manufacturing head 25 to the table 33. Each of the spindle head 21 and the additive manufacturing head 25 performs 5-axis machining to the workpiece 5. The laser is irradiated and the additive material is emitted from the additive manufacturing head 25 in parallel to the spindle 22 of the spindle head 21. Therefore, the part of the workpiece 5 accessible by the spindle 22 is also accessible by the additive manufacturing head 25. Since the additive manufacturing head 25 is parallel to the spindle 22, and the additive manufacturing head 25 and the spindle 22 move with the same moving device 11, the program of the additive manufacturing is created substantially the same as the program of the cutting process.

When the additive material, which is a powder, is supplied from the additive manufacturing head 25, the additive material drops by gravity. According to the machining apparatus 10 of the present embodiment, the additive material, which is a power, and the laser are supplied from above along the gravitational direction. Therefore, the machining apparatus 10 is well adapted to the moving device 11 having a vertically downward spindle 22 and the table 33.

As the additive manufacturing head 25 and the supply device 29 are always connected through the tube 13, the tube 15 and the optical fiber 17, a smaller number of components are arranged around the spindle head 21. Further, the single moving device 11 freely moves the spindle head 21 and the additive manufacturing head 25 relative to the workpiece 5. Therefore, the entire machining apparatus 10 becomes compact.

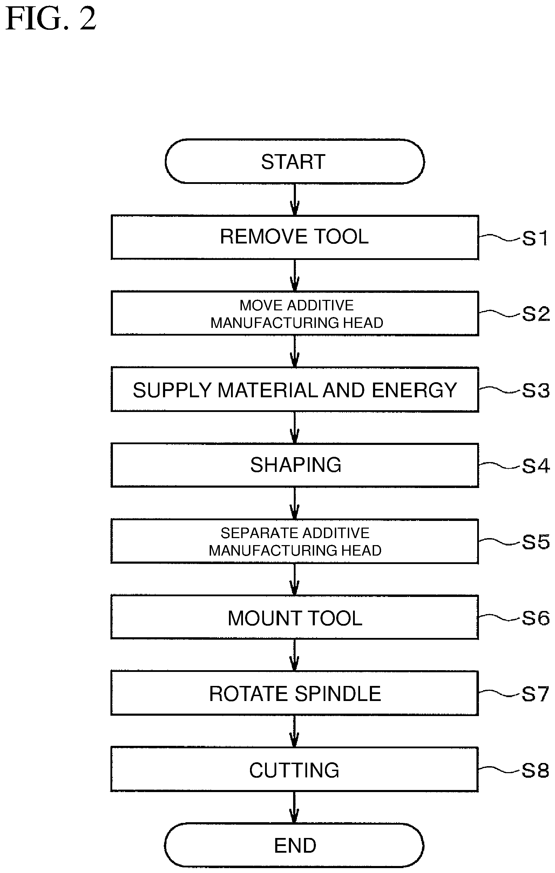

The machining method will be described with reference to FIG. 2. First, in step S1, the ATC 39 removes the cutting tool mounted on the spindle 22, then mounts the dummy plug 41 to the spindle 22. In step S2, the cylinder 27 moves the additive manufacturing head 25 close to the workpiece 5. In step S3, the supply device 29 supplies the additive material, the shield gas and the energy to the additive manufacturing head 25. The additive manufacturing head 25 releases the additive material, shield gas and energy in parallel with the axis 3 of the spindle 22. In step S4, the numerical control device 37 causes the moving device 11 to relatively move the spindle head 21 together with the additive manufacturing head 25 to the workpiece 5 for three-dimensionally shaping on the workpiece 5. In step S5, the cylinder 27 separates the additive manufacturing head 25 from the workpiece 5.

Subsequently, in step S6, the ATC 39 removes the dummy plug 41 mounted on the spindle 22, and mounts the cutting tool to the spindle 22. In step S7, the numerical control device 37 rotates the spindle 22. In step S8, the numerical control device 37 causes the moving device 11 to relatively move the spindle head 21 together with the additive manufacturing head 25 to the workpiece 5 for cutting the workpiece 5.

According to the machining method of the present embodiment, the single moving device 11 moves the spindle head 21 together with the additive manufacturing head 25, which achieves an easy control.

The present invention is not limited to the embodiments described above, and various modifications can be made without departing from the gist of the present invention, and all technical matters included in the technical idea described in the claims are the subject matter of the present invention. While the embodiments illustrate preferred examples, those skilled in the art will appreciate that various alternatives, modifications, variations, or improvements may be made in light of the teachings herein within the scope of the appended claims.

### Reference Signs List

5 Workpiece
10 Machining apparatus
11 Moving device
21 Spindle head
22 Spindle
23 Linear guide
25 Additive manufacturing head
27 Cylinder (Driving device)
29 Supply device
33 Table
35 Automatic tool changer
37 Numerical control device

## Claims

1. A machining apparatus, comprising:
a table (33) configured to fix a workpiece (5);
a spindle head (21) having a spindle (22) to which a cutting tool is attachable;
wherein the spindle (22) includes a spindle hole (22a); < a dummy plug (41) attachable to the spindle hole (22a) >;
a guide (23) arranged on the spindle head (21), the guide (23) extending in parallel with an axis (3) of the spindle (22);
an additive manufacturing head (25) arranged on the guide (23), the additive manufacturing head (25) configured to release an additive material and energy in parallel with the axis (3);
a driving device (27) configured to move the additive manufacturing head (25) in parallel with the axis (3) to move the additive manufacturing head (25) close to the table (33);
a supply device (29) configured to supply the additive material and energy to the additive manufacturing head (25); and
a moving device (11) configured to relatively move the spindle head (21) together with the manufacturing head (25) to the table (33), **characterised by** <->.

2. The machining apparatus according to claim 1, wherein the spindle (22) extends vertically.

3. The machining apparatus according to claim 1 or 2, further comprising:
an additive material supply tube (13) configured to supply the additive material to the additive manufacturing head (25); and
an optical fiber (17) configured to supply the energy to the additive manufacturing head (25);
wherein the supply device (29) is always connected to the additive manufacturing head (25) through the additive material supply tube (13) and the optical fiber (17).

4. The machining apparatus according to any one of claims 1 to 3, wherein
the additive material is a powder.

5. The machining apparatus according to any one of claims 1 to 4, wherein
the guide (23) is a linear guide.

6. The machining apparatus according to any one of claims 1 to 5, wherein
the driving device (27) is a cylinder.

7. The machining apparatus according to any one of claims 1 to 6, wherein
the driving device (27) configured to move a distal end of the additive manufacturing head (25) beyond a distal end of the spindle (22) toward the workpiece (5).

8. A machining method of a workpiece (5), the machining method comprising:
moving an additive manufacturing head (25) in parallel with a direction of a spindle in a spindle head (21) to move the additive manufacturing head (25) close to the workpiece (5);
supplying an additive material and energy to the additive manufacturing head (25);
relatively moving the spindle head (21) together with the additive manufacturing head (25) to the workpiece (5);
releasing the additive material and the energy from the additive manufacturing head (25) for three-dimensionally shaping on the workpiece (5) with a dummy plug (41) mounted to a spindle hole (22a) in the spindle;
moving the additive manufacturing head (25) in parallel with the direction of the spindle in the spindle head (21) to separate the additive manufacturing head (25) from the workpiece (5);
mounting a cutting tool to the spindle (22) of the spindle head (21);
rotating the spindle (22);
relatively moving the spindle head (21) together with the additive manufacturing head (25) to the workpiece (5) for cutting the workpiece (5); and
releasing the additive material and the energy from the additive manufacturing head (25).

9. The machining method according to claim 8, further comprising:
releasing the additive material and the energy from the additive manufacturing head (25) with a spindle hole (22a) in the spindle (22) covered with a spindle cover.

10. The machining method according to claim 8 or 9, further comprising:
moving a distal end of the additive manufacturing head (25) beyond a distal end of the spindle (22) close to the workpiece (5).

11. The machining method according to any one of claims 8 to 10, further comprising:
separating a distal end of the additive manufacturing head (25) away from the workpiece (5) than a distal end of the spindle (22).

12. The machining method according to any one of claims 8 to 11, further comprising:
moving the additive manufacturing head (25) close to the workpiece (5) after removing a tool attached to the spindle (22).

## Patentansprüche

1. Bearbeitungsvorrichtung, die aufweist:
einen Tisch (33), der konfiguriert ist, ein Werkstück (5) zu fixieren;
einen Spindelkopf (21) mit einer Spindel (22), an der ein Schneidwerkzeug anbringbar ist;
wobei die Spindel (22) ein Spindelloch (22a) aufweist;
eine Führung (23), die am Spindelkopf (21) angeordnet ist,
wobei sich die Führung (23) parallel zu einer Achse (3) der Spindel (22) erstreckt;
einen zusätzlichen Fertigungskopf (25), der an der Führung (23) angeordnet ist, wobei der zusätzliche Fertigungskopf (25) konfiguriert ist, ein zusätzliches Material und Energie parallel zur Achse (3) freizusetzen;
eine Antriebsvorrichtung (27), die konfiguriert ist, den zusätzlichen Fertigungskopf (25) parallel zur Achse (3) zu bewegen, um den zusätzlichen Fertigungskopf (25) nahe an den Tisch (33) zu bewegen;
eine Zuführungsvorrichtung (29), die konfiguriert ist, den zusätzlichen Fertigungskopf (25) das zusätzliche Material und Energie zuzuführen; und
eine Bewegungsvorrichtung (11), die konfiguriert ist, den Spindelkopf (21) zusammen mit dem Fertigungskopf (25) relativ zum Tisch (33) zu bewegen,
**gekennzeichnet durch** einen Blindstopfen (41), der an der Spindelöffnung (22a) anbringbar ist.

2. Bearbeitungsvorrichtung nach Anspruch 1, wobei sich die Spindel (22) vertikal erstreckt.

3. Bearbeitungsvorrichtung nach Anspruch 1 oder 2, die ferner aufweist:
ein Zuführungsrohr (13) für das zusätzliches Material, das konfiguriert ist, das zusätzliche Material dem zusätzlichen Fertigungskopf (25) zuzuführen; und
eine optische Faser (17), die konfiguriert ist, dem zusätzlichen Fertigungskopf (25) die Energie zuzuführen;
wobei die Zuführungsvorrichtung (29) immer mit dem zusätzlichen Fertigungskopf (25) durch das Zuführungsrohr (13) für das zusätzliches Material und die optische Faser (17) verbunden ist.

4. Bearbeitungsvorrichtung nach einem der Ansprüche 1 bis 3, wobei
das zusätzliche Material ein Pulver ist.

5. Bearbeitungsvorrichtung nach einem der Ansprüche 1 bis 4, wobei
die Führung (23) eine lineare Führung ist.

6. Bearbeitungsvorrichtung nach einem der Ansprüche 1 bis 5, wobei
die Antriebsvorrichtung (27) ein Zylinder ist.

7. Bearbeitungsvorrichtung nach einem der Ansprüche 1 bis 6, wobei
die Antriebsvorrichtung (27) konfiguriert ist, ein distales Ende des zusätzlichen Fertigungskopfes (25) über ein distales Ende der Spindel (22) hinaus zum Werkstück (5) zu bewegen.

8. Bearbeitungsverfahren eines Werkstücks (5), wobei das Bearbeitungsverfahren aufweist:
Bewegen eines zusätzlichen Fertigungskopfes (25) parallel zu einer Richtung einer Spindel in einem Spindelkopf (21),
um den zusätzlichen Fertigungskopf (25) nahe an das Werkstück (5) zu bewegen;
Zuführen eines zusätzlichen Materials und von Energie zum zusätzlichen Fertigungskopf (25);
relatives Bewegen des Spindelkopfes (21) zusammen mit dem zusätzlichen Fertigungskopf (25) zum Werkstück (5);
Freisetzen des zusätzlichen Materials und der Energie aus dem zusätzlichen Fertigungskopf (25) zum dreidimensionalen Formen auf dem Werkstück (5) mit einem Blindstopfen (41),
der an einem Spindelloch (22a) in der Spindel (22) angebracht ist;
Bewegen des zusätzlichen Fertigungskopfes (25) parallel zur Richtung der Spindel im Spindelkopf (21), um den zusätzlichen Fertigungskopf (25) vom Werkstück (5) zu trennen;
Anbringen eines Schneidwerkzeugs an der Spindel (22) des Spindelkopfs (21);
Drehen der Spindel (22);
relatives Bewegen des Spindelkopfes (21) zusammen mit dem zusätzlichen Fertigungskopf (25) zum Werkstück (5) zum Schneiden des das Werkstücks (5); und
Freisetzen des zusätzlichen Materials und der Energie aus dem zusätzlichen Fertigungskopf (25).

9. Bearbeitungsverfahren nach Anspruch 8, das ferner aufweist:
Freisetzen des zusätzlichen Materials und der Energie aus dem zusätzlichen Fertigungskopf (25), wobei ein Spindelloch (22a) in der Spindel (22) mit einer Spindelabdeckung abgedeckt wird.

10. Bearbeitungsverfahren nach Anspruch 8 oder 9, das ferner aufweist:
Bewegen eines distalen Endes des zusätzlichen Fertigungskopfs (25) über ein distales Ende der Spindel (22) hinaus nahe an das Werkstück (5).

11. Bearbeitungsverfahren nach einem der Ansprüche 8 bis 10, das ferner aufweist:
Trennen eines distalen Endes des zusätzlichen Fertigungskopfes (25) vom Werkstück (5) weiter als ein distales Ende der Spindel (22).

12. Bearbeitungsverfahren nach einem der Ansprüche 8 bis 11, das ferner aufweist:
Bewegen des zusätzlichen Fertigungskopfes (25) in die Nähe des Werkstücks (5) nach dem Entfernen eines an der Spindel (22) befestigten Werkzeugs.

## Revendications

1. Appareil d'usinage, comprenant :
une table (33) prévue pour fixer une pièce à usiner (5) ;
une tête (21) de broche pourvue d'une broche (22) à laquelle un outil de coupe peut être fixé ;
où la broche (22) présente un trou (22a) de broche ;
un guidage (23) disposé sur la tête (21) de broche, ledit guidage (23) s'étendant parallèlement à un axe (3) de la broche (22) ;
une tête de fabrication additionnelle (25) disposée sur le guidage (23), ladite tête de fabrication additionnelle (25) étant prévue pour libérer un matériau additionnel et de l'énergie parallèlement à l'axe (3) ;
un dispositif d'entraînement (27) prévu pour déplacer la tête de fabrication additionnelle (25) parallèlement à l'axe (3) afin de rapprocher la tête de fabrication additionnelle (25) de la table (33) ;
un dispositif d'alimentation (29) prévu pour fournir le matériau additionnel et l'énergie à la tête de fabrication additionnelle (25) ; et
un dispositif de déplacement (11) prévu pour déplacer relativement la tête (21) de broche avec la tête de fabrication (25) vers la table (33), **caractérisé par** un bouchon d'obturation (41) pouvant être fixé dans le trou (22a) de broche.

2. Appareil d'usinage selon la revendication 1, où la broche (22) s'étend verticalement.

3. Appareil d'usinage selon la revendication 1 ou la revendication 2, comprenant en outre :
un tuyau d'alimentation (13) en matériau additionnel prévu pour fournir le matériau additionnel à la tête de fabrication additionnelle (25) ; et
une fibre optique (17) prévue pour fournir l'énergie à la tête de fabrication additionnelle (25) ;
où le dispositif d'alimentation (29) est toujours relié à la tête de fabrication additionnelle (25) par le tuyau d'alimentation (13) en matériau additionnel et la fibre optique (17).

4. Appareil d'usinage selon l'une des revendications 1 à 3, où le matériau additionnel est une poudre.

5. Appareil d'usinage selon l'une des revendications 1 à 4, où the guidage (23) est un guidage linéaire.

6. Appareil d'usinage selon l'une des revendications 1 à 5, où le dispositif d'entraînement (27) est un cylindre.

7. Appareil d'usinage selon l'une des revendications 1 à 6, où le dispositif d'entraînement (27) est prévu pour déplacer une extrémité distale de la tête de fabrication additionnelle (25) au-delà d'une extrémité distale de la broche (22) vers la pièce à usiner (5).

8. Procédé d'usinage de a pièce à usiner (5), ledit procédé d'usinage comprenant :
le déplacement d'une tête de fabrication additionnelle (25) parallèlement à une direction d'une broche dans une tête (21) de broche , pour rapprocher la tête de fabrication additionnelle (25) de la pièce à usiner (5) ;
la fourniture d'un matériau additionnel et d'énergie à la tête de fabrication additionnelle (25) ;
le déplacement relatif de la tête (21) de broche avec la tête de fabrication additionnelle (25) vers la pièce à usiner (5) ;
la libération du matériau additionnel et de l'énergie de la tête de fabrication additionnelle (25) pour un formage tridimensionnel de la pièce à usiner (5), un bouchon d'obturation (41) étant monté sur un trou (22a) de broche dans la broche (22) ;
le déplacement de la tête de fabrication additionnelle (25) parallèlement à la direction de la broche dans la tête (21) de broche pour retirer la tête de fabrication additionnelle (25) de la pièce à usiner (5) ;
le montage d'un outil de coupe sur la broche (22) de la tête (21) de broche ;
l'entraînement en rotation de la broche (22) ;
le déplacement relatif de la tête (21) de broche avec la tête de fabrication additionnelle (25) vers la pièce à usiner (5) pour la découpe de la pièce à usiner (5) ; et la libération du matériau additionnel et de l'énergie de la tête de fabrication additionnelle (25).

9. Procédé d'usinage selon la revendication 8, comprenant en outre :
libération du matériau additionnel et de l'énergie de la tête de fabrication additionnelle (25), un trou (22a) de broche dans la broche (22) étant obturé par un couvercle de broche.

10. Procédé d'usinage selon la revendication 8 ou la revendication 9, comprenant en outre :
le déplacement d'une extrémité distale de la tête de fabrication additionnelle (25) au-delà d'une extrémité distale de la broche (22) pour rapprochement vers la pièce à usiner (5).

11. Procédé d'usinage selon l'une des revendications 8 à 10, comprenant en outre :
le retrait d'une extrémité distale de la tête de fabrication additionnelle (25) plus loin qu'une extrémité distale de la broche (22) par rapport à la pièce à usiner (5) .

12. Procédé d'usinage selon l'une des revendications 8 à 11, comprenant en outre :
le rapprochement de la tête de fabrication additionnelle (25) vers la pièce à usiner (5) après retrait d'un outil fixé à la broche (22).
